# EUROPÄISCHE PATENTSCHRIFT

(11) **EP 2 535 623 B1**
(45) Veröffentlichungstag und Bekanntmachung des Hinweises auf die Patenterteilung: **04.04.2018**
(21) Anmeldenummer: 12172231.8
(22) Anmeldetag: 15.06.2012
(51) Int. Cl.: F16K 11/02

(54) **Membranventil**
Membrane valve
Soupape à diaphragme

(30) Priorität: 17.06.2011 DE 102011104741
(43) Veröffentlichungstag der Anmeldung: 19.12.2012
(73) Patentinhaber: Renfert GmbH, 78247 Hilzingen (DE)
(72) Erfinder: Burgbacher, Tilo, 78465 Konstanz (DE); Scheid, Maximilian, 78266 Büsingen (DE)
(74) Vertreter: Daub, Thomas

(56) Entgegenhaltungen:
- DE-A1- 1 475 909
- DE-A1- 4 400 537
- DE-B- 1 078 831
- DE-B2- 2 150 635
- DE-C- 106 847

## Beschreibung

### Stand der Technik

Die Erfindung betrifft ein Membranventil nach dem Oberbegriff des Anspruchs 1.

Es ist bereits vorgeschlagen worden, ein Membranventil mit zumindest einer Membran und einem Gehäuse mit zumindest zwei Ventildurchgängen vorzusehen. Es sind "Rollventile" bekannt, bei denen ein Schaltelement eine Membran über einem Ventildurchgang abrollt. Ein Druck eines einströmenden Mediums drückt die Membran gegen eine Dichtfläche des Ventildurchgangs und verschließt diesen. Gattungsgemäße Membranventile werden aus der DE2150635 B2 und der DE1475909 A1 bekannt.

### Vorteile der Erfindung

Die Erfindung geht aus von einem Membranventil mit zumindest einer Membran und einem Gehäuse mit zumindest zwei Ventildurchgängen.

Es wird vorgeschlagen, dass ein beweglich gelagertes Schaltelement in zumindest einer Schaltposition zumindest einen der Ventildurchgänge verschließt, indem das Schaltelement die zumindest eine Membran gegen zumindest eine Dichtfläche des zumindest einen Ventildurchgangs drückt.

Unter einem "Membranventil" soll insbesondere ein Bauteil verstanden werden, welches dazu dient, einen Durchlass eines Mediums von einem oder mehreren als Einlass vorgesehenen Ventildurchgängen zu einem oder mehreren als Auslass vorgesehenen Ventildurchgängen zu kontrollieren und/oder zu steuern und/oder zu regeln. Insbesondere kann das Membranventil dazu vorgesehen sein, einen Durchgang zum Durchlass des Mediums zu einem und/oder mehreren Ventildurchgängen ganz oder teilweise zu öffnen und/oder zu schließen. Unter einem "Ventildurchgang" soll ein Einlass oder Auslass des Membranventils für ein Medium verstanden werden. Der Ventildurchgang enthält zumindest eine Ausnehmung, durch die das Medium strömen kann. Der Ventildurchgang enthält bevorzugt zumindest eine Dichtfläche. Die Dichtfläche des Ventildurchgangs kann bevorzugt im Inneren des Gehäuses angeordnet sein. Bevorzugt ist die Dichtfläche gegen eine Membranfläche gerichtet. Insbesondere kann die Dichtfläche die Ausnehmung des Ventildurchgangs umschließen. Die Dichtfläche umschließt die Ausnehmung bevorzugt kreisförmig. Besonders bevorzugt kann die Dichtfläche die Ausnehmung in einer länglichen Form, insbesondere einer schlitzförmigen und/oder elliptischen Form, umschließen. Die Ausnehmung kann insbesondere parallel und/oder quer zu einer Umfangsrichtung des Schaltelements und/oder in einer Schaltrichtung des Schaltelements länglich sein. Es kann eine für die Anwendung vorteilhafte Ventilcharakteristik erreicht werden. Ist die Ausnehmung in Umfangsrichtung und/oder Schaltrichtung des Schaltelements länglich, kann eine besonders feine Dosierbarkeit erreicht werden, wenn das Schaltelement in Umfangsrichtung und/oder in Schaltrichtung bewegt wird. Ist die Ausnehmung quer zur Umfangsrichtung und/oder Schaltrichtung des Schaltelements länglich, kann ein besonders schnelles, sicheres Offnen und/oder Schließen des Ventildurchgangs bei einer kleinen Änderung der Schaltposition des Schaltelements erreicht werden. Bevorzugt kann der Ventildurchgang eine Schnittstelle enthalten, die zur Aufnahme eines Schlauchs und/oder Rohrs und/oder einer anderen Einrichtung zum An- oder Abtransport des Mediums vorgesehen ist. Das Medium kann insbesondere durch als Einlass vorgesehene Ventildurchgänge in das Gehäuse des Membranventils ein- und durch als Auslass vorgesehene Ventildurchgänge wieder ausströmen. Insbesondere kann das Membranventil dazu vorgesehen sein, den Durchfluss des Mediums von einem oder mehreren als Einlass vorgesehenen Ventildurchgängen und/oder den Durchfluss zu einem oder mehreren als Auslass vorgesehenen Ventildurchgängen ganz oder teilweise zu unterbinden. Unter einem "Medium" soll ein fließfähiger Stoff verstanden werden, wie insbesondere ein Gas, eine Flüssigkeit und/oder ein Gas- oder Flüssigkeitsgemisch und/oder ein fließfähiges Gemisch eines Gases und/oder einer Flüssigkeit mit Festkörpern. Insbesondere kann das Medium ein Gemisch aus Luft und Schleifkörpern enthalten. Die Schleifkörper können zum Beispiel ganz oder teilweise aus Sand und/oder Glasperlen bestehen, wie sie beim Sandstrahlen und/oder Glasperlenstrahlen gebräuchlich sind. Unter einem "Schaltelement" soll ein beweglich gelagertes Element verstanden werden, das zum Schalten des Membranventils vorgesehen ist. Das Schaltelement kann von einem Bediener und/oder von einer automatischen Steuervorrichtung, zum Beispiel einem Stellmotor, bewegt werden. Das Schaltelement kann gegenüber den zu öffnenden und/oder zu verschließenden Ventildurchgängen bevorzugt beweglich gelagert sein, insbesondere verschiebbar und/oder verdrehbar gelagert. Abhängig von einer Schaltposition können Ventildurchgänge des Membranventils durch das Schaltelement ganz oder teilweise geöffnet und/oder verschlossen werden. Das Schaltelement des Membranventils kann definierte Schaltpositionen aufweisen. An diesen Schaltpositionen kann das Schaltelement zum Beispiel einrasten. Bevorzugt können in den Schaltpositionen Ventildurchgänge vollständig geöffnet und/oder verschlossen sein. Das Schaltelement kann auch dazu vorgesehen sein, entlang eines kontinuierlichen Schaltbereichs bewegt zu werden. In diesem Schaltbereich können sich Ventildurchgänge ganz oder auch teilweise öffnen und/oder schließen. Unter einer "Membran" soll insbesondere ein elastisches Element verstanden werden, das zum Verschließen eines oder mehrerer Ventildurchgänge vorgesehen ist. Bevorzugt weist die Membran zumindest im Wesentlichen eine Membranfläche sowie eine Membrandicke auf. Die Membranfläche kann eine beliebig geformte Fläche sein. Insbesondere kann die Membranfläche ein geschlossenes Band formen. Die Membran kann bevorzugt aus einem Elastomermaterial hergestellt sein. Besonders bevorzugt kann die Membran aus einem Silikonmaterial hergestellt sein. Es sind auch weitere, insbesondere elastische Materialien oder Materialkombinationen denkbar. Ein Ventildurchgang kann insbesondere dadurch verschlossen werden, dass das Schaltelement die Membran auf die die Ausnehmung eines Ventildurchgangs umgebende Dichtfläche drückt. Bevorzugt deckt die Membran die Ausnehmung und die Dichtfläche des zu verschließenden Ventildurchgangs vollständig ab. Bevorzugt kann das Schaltelement die Membran zumindest weitgehend senkrecht auf die Dichtfläche des Ventildurchgangs drücken. Unter "weitgehend senkrecht" soll in diesem Zusammenhang verstanden werden, dass ein Winkel zwischen einer Absenkbewegung der Membran auf die Dichtfläche und der Dichtfläche von einem 90°-Winkel um weniger als 20°, bevorzugt um weniger als 10° abweicht. Es kann eine besonders zuverlässige Abdichtung der Ventildurchgänge erreicht werden. Insbesondere kann die Membran Toleranzen des Schaltelements und einer Lagerung des Schaltelements, des Gehäuses und der Ventildurchgänge und der Dichtflächen der Ventildurchgänge ausgleichen. Wird die Membran weitgehend senkrecht auf die Dichtfläche gedrückt, können nur geringe Bewegungen quer zu den Dichtflächen und einer Membranoberfläche auftreten. Insbesondere kann ein Gleiten der Membran auf der Dichtfläche vermieden werden. Ein Verschleiß der Membranoberfläche und/oder der Dichtflächen kann reduziert werden. Insbesondere kann bei Medien, die abrasive Festkörper, wie Schleifkörper, enthalten, ein übermäßiger Verschleiß der Membranfläche und/oder der Dichtfläche vermieden werden. Das Membranventil weist eine Lagervorrichtung auf, die das Schaltelement am Gehäuse um eine Schaltachse drehbar lagert. Bevorzugt weist das Schaltelement eine Welle auf, mit der es an der Lagervorrichtung drehbar gelagert ist. Die Lagervorrichtung enthält bevorzugt eine Lagerbuchse, die die Welle drehbar aufnimmt. Besonders bevorzugt weist das Schaltelement an beiden Enden Wellen auf, mit denen es in Lagervorrichtungen an beiden Enden des Gehäuses gelagert ist. Zumindest eine Lagervorrichtung und/oder Welle kann Ausnehmungen enthalten, die als Ventildurchgang dienen. Bevorzugt ist die Lagervorrichtung mit dem Gehäuse einstückig ausgebildet. Bevorzugt kann das Gehäuse zumindest eine Ausnehmung aufweisen, durch die zumindest ein Ende der Welle des Schaltelements aus dem Gehäuse herausragt. Die Lagervorrichtung kann bevorzugt ein Dichtelement enthalten. Das Dichtelement kann die Welle gegenüber der Ausnehmung abdichten, so dass entlang der Welle kein Medium aus dem Gehäuse austreten kann. Außerhalb des Gehäuses kann am Ende der Welle ein Schaltknopf befestigt sein, mit dem ein Benutzer und/oder eine automatische Steuervorrichtung das Schaltelement bedienen kann. Das Schaltelement kann besonders bedienerfreundlich zu den Schaltpositionen bewegt werden.

Es wird vorgeschlagen, dass die zumindest eine Membran die Schaltachse um 360° umschließt. Bevorzugt ist die Membran als ringförmiges Band ausgebildet, das die Schaltachse um 360° umschließt. Besonders bevorzugt ist die Membran koaxial zur Schaltachse um das Schaltelement angeordnet. Das Schaltelement kann die Membran besonders wirksam abhängig von der Schaltposition auf radial um die Schaltachse angeordnete Dichtflächen drücken.

Bevorzugt ist zumindest ein Ventildurchgang radial zur Schaltachse angeordnet. Besonders bevorzugt ist der oder sind die Ventildurchgänge, die vom Schaltelement mit der Membran abhängig von der Schaltposition verschlossen werden sollen, radial zur Schaltachse angeordnet. Besonders bevorzugt kann die Membran in Richtung der Schaltachse eine Breite aufweisen, die zumindest der Breite der Dichtflächen in Richtung der Schaltachse der das Schaltelement radial umgebenden Ventildurchgänge entspricht. Die radial angeordneten Ventildurchgänge können als Einlass vorgesehen sein, bevorzugt sind diese Ventildurchgänge als Auslass vorgesehen. Besonders bevorzugt sind diese Ventildurchgänge zumindest weitgehend gleichmäßig verteilt in einer Umfangsrichtung um die Schaltachse angeordnet. Unter "weitgehend gleichmäßig verteilt" soll in diesem Zusammenhang insbesondere verstanden werden, dass der Winkelabstand um die Schaltachse zwischen benachbarten Ventildurchgängen um weniger als 50%, bevorzugt um weniger als 25% und besonders bevorzugt um weniger als 10% abweicht. Besonders bevorzugt schneidet eine Ebene, auf der die Schaltachse senkrecht steht, Schwerpunkte der Dichtflächen der Ventildurchgänge. Bevorzugt weisen die Flächennormalen der Dichtflächen der radial um die Schaltachse angeordneten Ventildurchgänge zumindest im Wesentlichen in Richtung der Schaltachse. Unter "im Wesentlichen" soll in diesem Zusammenhang verstanden werden, dass die Flächennormalen um weniger als 30°, bevorzugt um weniger als 20°, besonders bevorzugt um weniger als 10° von einer Richtung von der Dichtfläche zur Schaltachse abweichen. Die Dichtflächen können eine Krümmung um die Schaltachse aufweisen. Bevorzugt sind die Dichtflächen zumindest im Wesentlichen eben ausgebildet. Besonders bevorzugt sind die Dichtflächen konvex ausgebildet oder haben rings um die Ausnehmung eine partielle Erhebung. Die Dichtflächen können sich besonders gut in die Membran eindrücken und die Dichtwirkung erhöhen. Das Schaltelement kann durch eine Drehbewegung um die Schaltachse besonders wirkungsvoll einzelne, in Umfangsrichtung angeordnete Ventildurchgänge öffnen und/oder verschließen, indem es die Membran auf die Dichtflächen der zu verschließenden Ventildurchgänge drückt und/oder die Membran von den Dichtflächen der zu öffnenden Ventildurchgänge abhebt.

Weiter wird vorgeschlagen, dass zumindest ein Ventildurchgang in einem Deckelteil des Gehäuses im Bereich einer Stirnseite des Schaltelements angeordnet ist. Unter einem "Deckelteil" des Gehäuses soll insbesondere ein Teil des Gehäuses verstanden werden, welches sich von einem Gehäuseunterteil trennen lässt und dieses verschließt. Das Membranventil kann durch Entfernen des Deckelteils geöffnet werden. Unter "im Bereich einer Stirnseite des Schaltelements angeordnet" soll insbesondere verstanden werden, dass die Ausnehmung des Ventildurchgangs, durch die das Medium fließt, in einem Raum zwischen dem Gehäuse und einer Stirnseite des Schaltelements endet. Bevorzugt ist der Ventildurchgang in Richtung der Schaltachse angeordnet. Besonders bevorzugt ist der Ventildurchgang um die Schaltachse angeordnet. Der Ventildurchgang kann die Schaltachse umschließen. Der Ventildurchgang im Deckel kann als Auslass vorgesehen sein. Bevorzugt ist der Ventildurchgang im Deckel als Einlass vorgesehen. Besonders bevorzugt kann der Ventildurchgang im Deckel immer geöffnet sein. Der Ventildurchgang im Deckel kann besonders geeignet als ein Haupteinlass oder Hauptauslass vorgesehen sein, von dem aus das Medium zu den anderen Ventildurchgängen fließt oder zu dem das Medium von den anderen Ventildurchgängen fließt. Das Medium kann besonders gleichmäßig vom Ventildurchgang im Deckelteil zu den anderen Ventildurchgängen strömen oder von den anderen Ventildurchgängen zum Ventildurchgang im Deckelteil strömen. In einer weiteren Variante der Erfindung kann zumindest ein Ventildurchgang in einem Gehäuseunterteil im Bereich einer Stirnseite des Schaltelements angeordnet sein.

Es wird vorgeschlagen, dass das Schaltelement um einen Umfang um die Schaltachse zumindest einen konvex gekrümmten Dichtbereich und zumindest einen gegenüber dem Dichtbereich in Richtung zur Schaltachse zurückversetzten Durchlassbereich aufweist. Die Durchlassbereiche und die Dichtbereiche sind bevorzugt in Richtung der Schaltachse eben ausgebildet. Bevorzugt ist der oder sind die Dichtbereiche um die Schaltachse kreissegmentförmig ausgebildet. Der oder die Durchlassbereiche sind bevorzugt als Sekanten eines Umfangs der Dichtbereiche des Schaltelementes ausgebildet. Eine Mantelfläche des Schaltelements kann im Bereich des Durchlassbereichs unterbrochen sein. Das Schaltelement kann mit einem Dichtbereich die Membran vorteilhaft auf die Dichtfläche eines radial um die Schaltachse angeordneten, zu verschließenden Ventildurchgangs drücken. Eine Projektion des Dichtbereichs auf die Dichtfläche eines zu verschließenden Ventildurchgangs deckt die Dichtfläche bevorzugt zumindest vollständig ab. Ein verbleibender Spalt zwischen den Dichtbereichen des Schaltelements und den Dichtflächen des Ventildurchgangs ist bevorzugt dünner als die Dicke der Membran in einem nicht vorgespannten Zustand, die den Ventildurchgang verschließt. Die Membran kann durch das Schaltelement elastisch verformt werden. Es kann eine besonders sichere Dichtwirkung erreicht werden.

Bevorzugt ist das Schaltelement über eine Gleitfläche mit der zumindest einen Membran gekoppelt. Die Innenfläche der Membran kann als Gleitfläche ausgebildet sein. Zwischen dem Schaltelement und der Membran kann zusätzlich ein Schmiermittel aufgetragen sein. Die Innenfläche der Membran und/oder die Außenfläche des Schaltelements kann eine Gleitbeschichtung aufweisen. Unter einer "Gleitbeschichtung" soll insbesondere eine Beschichtung verstanden werden, die eine Gleitreibung und/oder Haftreibung zwischen dem Schaltelement und der Membran reduziert. Die Gleitbeschichtung kann zum Beispiel eine PTFE-Beschichtung sein. Die Gleitfläche kann durch ein Gleitelement gebildet werden, zum Beispiel ein PTFE-Band. Das Gleitelement kann bevorzugt koaxial um die Schaltachse zwischen Schaltelement und Membran angeordnet sein. Die Reibung zwischen Schaltelement und Membran kann reduziert werden. Die Membran kann in Richtung des Umfangs um die Schaltachse weitgehend stillstehen, während das Schaltelement gedreht wird. Ein Gleiten der Membran auf den Dichtflächen der zu verschließenden Ventildurchgänge kann vermieden werden. Ein Verschleiß zwischen Membranelement und Dichtflächen der Ventildurchgänge kann reduziert werden. Es ist zumindest eine Dichtfläche zumindest eines Ventildurchgangs gegenüber einem Innenradius des Gehäuses um die Schaltachse als Vorsprung in Richtung zur Schaltachse ausgebildet. Unter einem "Innenradius des Gehäuses" soll insbesondere ein Radius von der Schaltachse auf eine Innenwand des Gehäuses außerhalb der Bereiche der Dichtflächen der Ventildurchgänge verstanden werden. Eine Flächenpressung der Membran auf die Dichtflächen im Dichtbereich des Schaltelements kann erhöht werden. Die zu verschließenden Ventildurchgänge können besonders wirkungsvoll verschlossen werden. Die Flächenpressung der Membran auf die Innenseite des Gehäuses im Bereich des Dichtbereichs des Schaltelements kann reduziert werden. Bevorzugt ist ein Spalt zwischen dem Dichtbereich des Schaltelements und der Innenwand des Gehäuses größer als die Dicke der Membran mit Gleitfläche. Es kann vermieden werden, dass das Schaltelement die Membran gegen die Innenwand des Gehäuses drückt. Eine Reibung zwischen Schaltelement und Membran kann reduziert werden. Das Schaltelement kann besonders leichtgängig sein.

Weiter wird vorgeschlagen, dass die zumindest eine Membran im Bereich zumindest einer Dichtfläche eine Vorspannung aufweist, welche von der Dichtfläche weggerichtet ist. Die Vorspannung kann insbesondere bestehen, wenn die Membran auf der Dichtfläche aufliegt. Insbesondere kann die Membran durch das Schaltelement vorgespannt werden. Bevorzugt kann die Membran auf das Schaltelement aufgespannt werden. Ist der Durchlassbereich des Schaltelements auf eine Dichtfläche gerichtet, kann zuverlässig erreicht werden, dass sich die Membran von den Dichtflächen wegbewegt und den Ventildurchgang öffnet. Bevorzugt ist die Vorspannung größer als eine Kraft, die ein durch das Membranventil strömendes Medium auf die Membran in Richtung der Dichtfläche ausübt. Es kann zuverlässig vermieden werden, dass ein Ventildurchgang ungewollt verschlossen wird.

Es wird vorgeschlagen, dass die zumindest eine Membran im nicht vorgespannten Zustand die Grundform eines Vielecks aufweist. Bevorzugt ist das Vieleck so angeordnet, dass sich seine Ecken zwischen den um den Umfang der Schaltachse angeordneten Ventildurchgängen befinden. Im auf das Schaltelement aufgespannten Zustand legt sich die Membran bevorzugt an die Form des Dichtbereichs und/oder des Durchlassbereichs des Schaltelements an. Die Membran kann im Durchlassbereich des Schaltelements eine besonders wirkungsvolle Rückstellkraft erzeugen. Die Membran kann sich im Durchlassbereich des Schaltelements besonders sicher von der Dichtfläche eines zu öffnenden Ventildurchgangs wegbewegen.

Weiter wird vorgeschlagen, dass ein Formteil die zumindest eine Membran enthält und dass das Formteil die Ecken des Vielecks mit dem Gehäuse verbindet. Besonders bevorzugt sind das Formteil und die Membran einstückig ausgeführt. Das Formteil kann bevorzugt aus demselben Material wie die Membran bestehen. Das Formteil kann zur Befestigung der Membran im Gehäuse vorgesehen sein.

Bevorzugt enthält das Formteil eine als Gehäusedichtung ausgebildete Dichtfläche. Besonders bevorzugt ist die Gehäusedichtung dazu vorgesehen, den Deckelteil des Gehäuses gegen das Gehäuseunterteil abzudichten. Es kann eine besonders wirksame Befestigung der Membran im Gehäuse erreicht werden. Es kann ein Mitdrehen der Membran mit dem Schaltelement vermieden werden. Ein Gleiten der Membran auf den Dichtflächen kann vermieden werden. Verschleiß zwischen der Membran und den Dichtflächen kann reduziert werden.

Es wird zumindest eine Rasteinrichtung vorgeschlagen, welche das Schaltelement in definierte Schaltpositionen einrasten lässt. Die Rasteinrichtung kann zumindest ein Rastmittel, wie eine Rastkugel und/oder eine Rastnase und/oder einen Rastbolzen, beinhalten. Bevorzugt ist das Rastmittel federnd gelagert. Das Rastmittel kann in eine Rastausnehmung eingreifen. Das Rastmittel kann am Gehäuse gelagert sein. Die Rastausnehmungen können am Schaltelement angeordnet sein, insbesondere an der Welle des Schaltelements. Bevorzugt ist das Rastmittel am Schaltelement angeordnet. Bevorzugt sind Rastausnehmungen am Deckelteil des Gehäuses angeordnet. Es kann besonders wirksam sichergestellt werden, dass das Membranventil nur in vorgesehenen Schaltstellungen betrieben wird. Es kann verhindert werden, dass sich das Schaltelement während eines Betriebs des Membranventils verstellt. Die Anzahl der Raststellungen entspricht bevorzugt der Anzahl der Schaltstellungen des Schaltelements. Es sind auch weitere, für den Fachmann sinnvolle Anordnungen der Rastmittel möglich.

In einer besonders kostengünstigen Ausgestaltung der Rasteinrichtung wird vorgeschlagen, dass zumindest eine eine Rastnase bildende Erhebung am Schaltelement und zumindest eine eine Rastausnehmung bildende Vertiefung an der Membran angeordnet ist. Die Anzahl der Rastausnehmungen entspricht bevorzugt der Anzahl der gewünschten Schaltstellungen des Schaltelements oder ist ein Vielfaches davon. Bevorzugt sind am Schaltelement mehrere Rastnasen angeordnet. Die Rastnasen des Schaltelements rasten in den gewünschten Schaltpositionen in die Rastausnehmungen der Membran ein. Bevorzugt wird für den Rastvorgang die Elastizität der Membran genutzt. Es ist keine federnde Lagerung des durch die Rastnasen gebildeten Rastmittels erforderlich.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Membranventils in einem ersten Ausführungsbeispiel,
- Fig. 2: eine Explosionsdarstellung des Membranventils in einem ersten Ausführungsbeispiel,
- Fig. 3: eine Schnittdarstellung durch das Membranventil entlang einer Schaltachse,
- Fig. 4: eine Draufsicht auf das geöffnete Membranventil,
- Fig. 5: eine schematische Darstellung eines Gehäuseunterteils des Membranventils,
- Fig. 6: eine schematische Darstellung eines Schaltelements des Membranventils,
- Fig. 7: eine schematische Darstellung eines Rastbolzens des Membranventils,
- Fig. 8: eine schematische Darstellung eines Membranventils in einem zweiten Ausführungsbeispiel,
- Fig. 9: eine Draufsicht auf das geöffnete Membranventil des zweiten Ausführungsbeispiels,
- Fig. 10: eine schematische Darstellung eines Formteils des Membranventils des zweiten Ausführungsbeispiels,
- Fig. 11: eine schematische Darstellung eines Deckelteils des Membranventils des zweiten Ausführungsbeispiels,
- Fig. 12: eine schematische Darstellung eines Schaltelements des Membranventils des zweiten Ausführungsbeispiels,
- Fig. 13: eine schematische Darstellung eines Membranventils in einem dritten Ausführungsbeispiel,
- Fig. 14: eine Draufsicht auf ein Gehäuseunterteil des Membranventils des dritten Ausführungsbeispiels,
- Fig. 15: eine schematische Darstellung eines Formteils des Membranventils des dritten Ausführungsbeispiels und
- Fig. 16: eine schematische Darstellung eines Schaltelements und eines Formteils eines Membranventils in einem vierten Ausführungsbeispiel.

### Beschreibung der Ausführungsbeispiele

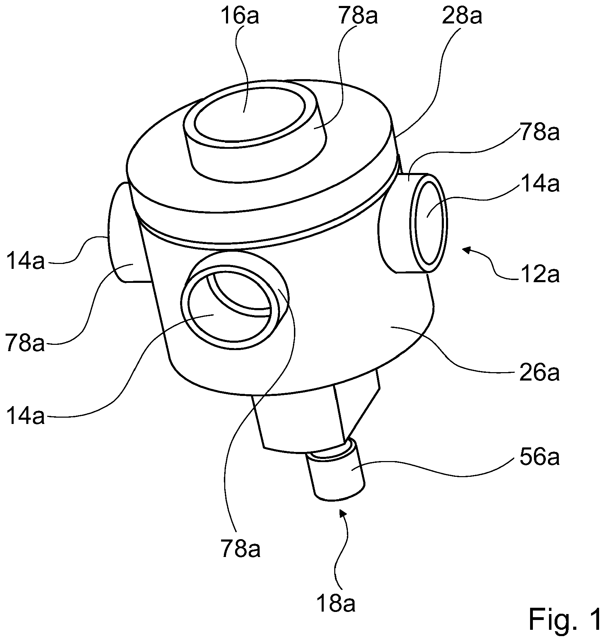

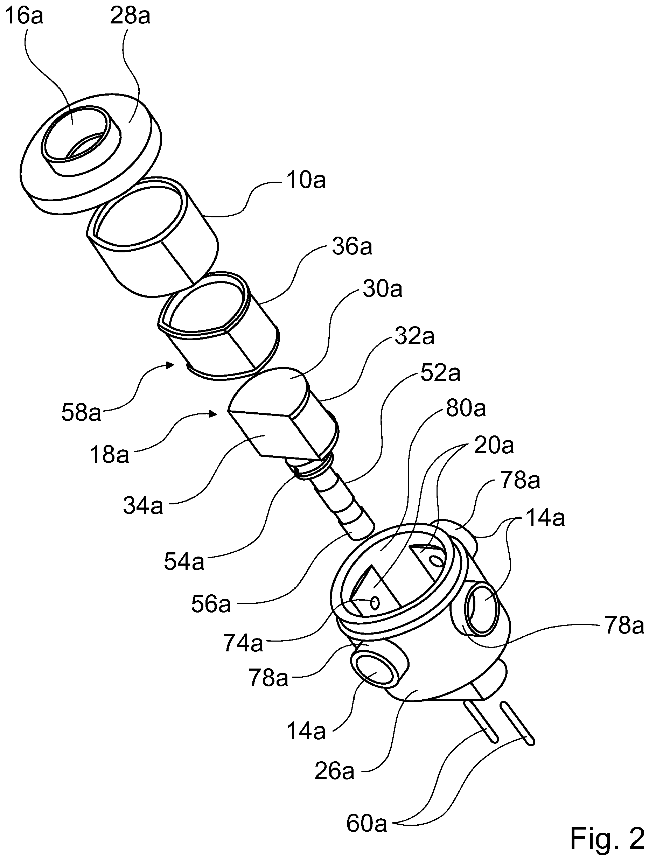

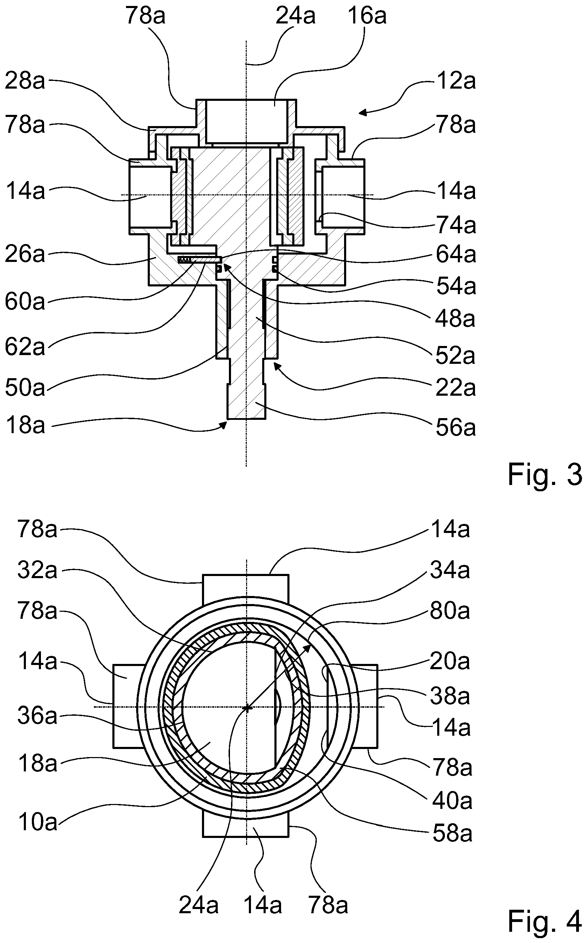

Figur 1 und Figur 2 zeigen ein Membranventil mit einer Membran 10a und einem Gehäuse 12a mit fünf Ventildurchgängen 14a, 16a mit einem beweglich gelagerten Schaltelement 18a, das in vier Schaltpositionen jeweils drei der vier Ventildurchgänge 14a verschließt, indem das Schaltelement 18a die Mem-bran 10a gegen Dichtflächen 20a der zu verschließenden Ventildurchgänge 14a drückt (Figur 3, Figur 4). Eine Lagervorrichtung 22a lagert das Schaltelement 18a an einem Gehäuseunterteil 26a des Gehäuses 12a um eine Schaltachse 24a drehbar. Die Membran 10a ist elastisch und aus einem Silikonmaterial gefertigt. Die Lagervorrichtung 22a enthält eine Lagerbuchse 50a, die eine Welle 52a des Schaltelements 18a aufnimmt.

Die Lagervorrichtung 22a ist einstückig mit dem Gehäuseunterteil 26a ausgebildet. Die Welle 52a enthält einen Dichtbereich 54a, der die Welle 52a gegenüber der Lagervorrichtung 22a des Gehäuses 12a abdichtet. Ein Ende 56a der Welle 52a steht aus dem Gehäuse 12a vor. An diesem ist ein nicht dargestellter Schaltknopf angebracht, mit dem ein Benutzer das Schaltelement 18a drehen kann. Die Membran 10a umschließt die Schaltachse 24a um 360°. Die vier Ventildurchgänge 14a sind in einem Gehäuseunterteil 26a radial zur Schaltachse 24a angeordnet. Die Ventildurchgänge 14a sind gleichmäßig um einen Umfang des Gehäuseunterteils 26a um die Schaltachse 24a verteilt, so dass um die Schaltachse 24a zwischen den Ventildurchgängen 14a jeweils ein rechter Winkel besteht. Der Ventildurchgang 16a ist in einem Deckelteil 28a des Gehäuses 12a im Bereich einer Stirnseite 30a des Schaltelements 18a angeordnet. Im Bereich zwischen der Stirnseite 30a und dem Deckelteil 28a befindet sich ein mit dem Ventildurchgang 16a korrespondierender Raum, so dass ein ein- oder ausströmendes Medium durch diesen Raum um die Stirnseite 30a des Schaltelements 18a strömen kann. An den Ventildurchgängen 14a, 16a sind Schnittstellen 78a vorgesehen, an denen nicht dargestellte Schläuche angeschlossen werden. Ein Medium, im Beispiel ein Sand/Luftgemisch, welches zum Sandstrahlen eingesetzt wird, wird durch den am Ventildurchgang 16a angeschlossenen Schlauch zugeführt und verlässt das Membranventil, abhängig von der Schaltposition des Schaltelements 18a, durch einen der Schläuche an einem der Ventildurchgänge 14a.

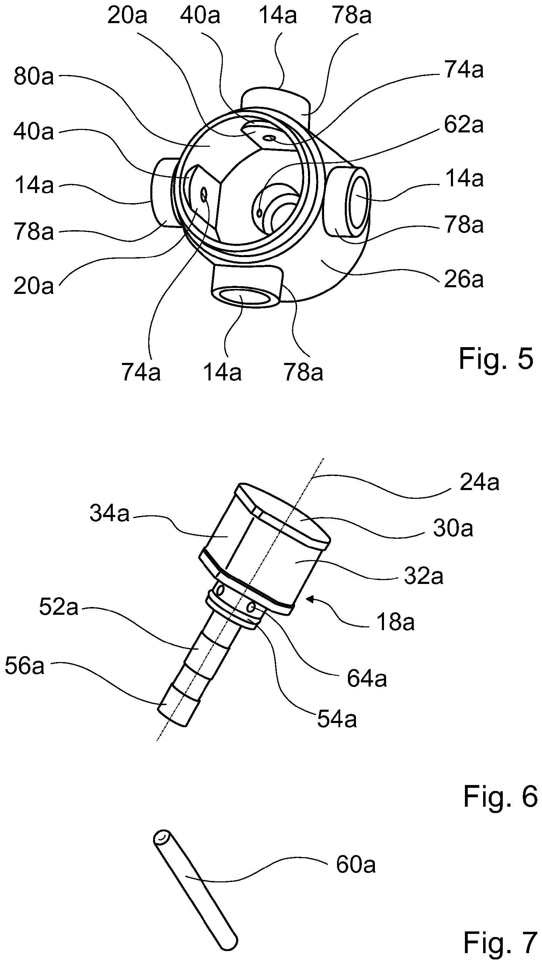

Das Schaltelement 18a weist um einen Umfang um die Schaltachse 24a einen konvex gekrümmten Dichtbereich 32a und einen gegenüber dem Dichtbereich 32a in Richtung zur Schaltachse 24a zurückversetzen Durchlassbereich 34a auf. Die Grundform des Schaltelements 18a entspricht einem Kreiszylinder, wobei der Dichtbereich 32a als Segment dieses Kreiszylinders ausgebildet ist. Der Durchlassbereich 34a ist als ebene Abflachung des Kreiszylinders ausgebildet. Das Schaltelement 18a ist über eine Gleitfläche 36a mit der Membran 10a gekoppelt. Die Gleitfläche 36a wird durch ein Gleitelement 58a aus PTFE gebildet. Die Dichtflächen 20a der vier Ventildurchgänge 14a sind gegenüber einem Innenradius 38a des Gehäuses 12a um die Schaltachse 24a als Vorsprung 40a in Richtung zur Schaltachse 24a ausgebildet (Figur 5). Die Dichtflächen 20a begrenzen kreisförmig ausgebildete Ausnehmungen 74a, durch die das Medium strömen kann. Die Membran 10a weist im Bereich der Dichtflächen 20a eine Vorspannung auf, welche von den Dichtflächen 20a weggerichtet ist. Die Vorspannung wird durch das Schaltelement 18a erzeugt, welches einen größeren Umfang als die Membran 10a und das Gleitelement 58a im ungespannten Zustand aufweist. Die Membran 10a wird auf das Schaltelement 18a aufgespannt. Durch die Vorspannung liegen das Gleitelement 58a und die Membran 10a am Schaltelement 18a und insbesondere am Durchlassbereich 34a des Schaltelements 18a an. Ein Spalt zwischen den Dichtflächen 20a der Ventildurchgänge 14a, die dem Dichtbereich 32a des Schaltelements 18a gegenüberliegen, und dem Dichtbereich 32a des Schaltelements 18a ist dünner als eine Dicke der Membran 10a und des Gleitelements 58a. Das Schaltelement 18a presst die Membran 10a in dem Spalt zwischen den Dichtflächen 20a und dem Dichtbereich 32a so gegen die Dichtflächen 20a, dass sich die Membran 10a elastisch verformt und die Dichtflächen 20a verschließt. Diese Ventildurchgänge 14a sind daher geschlossen. Ein Spalt zwischen der Dichtfläche 20a des Ventildurchgangs 14a, der dem Durchlassbereich 34a des Schaltelements 18a gegenüberliegt, und dem Durchlassbereich 34a des Schaltelements 18a ist wesentlich größer als die Dicke der Membran 10a und des Gleitelements 58a, so dass zwischen der Membran 10a und der Dichtfläche 20a ein Durchgang verbleibt, durch den ein Medium in den Raum oder aus dem Raum zwischen der Stirnseite 30a des Schaltelements 18a und dem Deckelteil 28a strömen kann. Dieser Raum korrespondiert mit dem Ventildurchgang 16a. Der Ventildurchgang 14a ist daher in diesem Schaltzustand mit dem Ventildurchgang 16a verbunden. Ein Durchlass zwischen dem Ventildurchgang 16a und dem Ventildurchgang 14a ist geöffnet. Wird das Schaltelement 18a gedreht, bewegen sich der Dichtbereich 32a und der Durchlassbereich 34a über andere Ventildurchgänge 14a, so dass ein anderer Ventildurchgang 14a geöffnet und die weiteren Ventildurchgänge 14a verschlossen werden. Da die Dichtflächen 20a als Vorsprung 40a gegenüber einer Innenwand 80a des Gehäuses 12a ausgebildet sind, ist der Spalt zwischen Dichtbereich 32a und Dichtflächen 20a besonders eng. Der Spalt zwischen der Innenwand 80a des Gehäuses und dem Dichtbereich 32a außerhalb der Vorsprünge 40a kann größer ausfallen, wodurch die Reibung zwischen der Membran 10a und dem Schaltelement 18a reduziert werden kann. Die Innenwand 80a des Gehäuses 12a übt in diesem Bereich keinen Druck auf die Membran 10a aus. Bei dieser Ausgestaltung des erfindungsgemäßen Membranventils soll immer nur ein Ventildurchgang 14a geöffnet sein. Um sicherzustellen, dass immer nur ein Ventildurchgang 14a geöffnet ist, erstreckt sich der Durchlassbereich 34a des Schaltelements 18a maximal entlang einer kürzesten Verbindungslinie zweier gegenüberliegender, benachbarter Außenkanten der Dichtflächen 20a benachbarter Ventildurchgänge 14a. Je nach Anwendung ist es auch möglich, das Schaltelement 18a und die Dichtflächen 20a der Ventildurchgänge 14a so zu formen, dass gleichzeitig mehrere Ventildurchgänge 14a geöffnet sind. Es ist ebenfalls möglich, dass sich ein oder mehrere Ventildurchgänge 14a bei einer Drehung des Schaltelements 18a zu schließen beginnen, während sich andere Ventildurchgänge 14a bereits zu öffnen beginnen. Dies kann zum Beispiel erreicht werden, indem sich der Durchlassbereich 34a über einen größeren Bereich um die Schaltachse erstreckt als im gezeigten Ausführungsbeispiel, so dass er die Dichtflächen 20a von benachbarten Ventildurchgängen 14a gleichzeitig zumindest teilweise überdecken kann. Eine Rasteinrichtung 48a lässt das Schaltelement 18a in definierte Schaltpositionen einrasten (Figur 6, Figur 7). Die Rasteinrichtung 48a enthält zwei Rastbolzen 60a, die mit nicht dargestellten Federelementen in Ausnehmungen 62a des Gehäuseunterteils 26a federnd gelagert sind. Das Schaltelement 18a enthält im Dichtbereich 54a der Welle 52a Rastausnehmungen 64a, in die die Rastbolzen 60a einrasten. Die Rastausnehmungen 64a sind in einem Winkel von 90° um den Umfang des Dichtbereichs 54a angeordnet, so dass das Schaltelement in vier um 90° versetzte Rastpositionen einrastet.

Die nachfolgende Beschreibung und die Zeichnungen zweier weiterer Ausführungsbeispiele beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele verwiesen werden kann. Zur Unterscheidung der Ausführungsbeispiele sind anstelle des Buchstabens a des ersten Ausführungsbeispiels die Buchstaben b und c den Bezugszeichen der weiteren Ausführungsbeispiele nachgestellt.

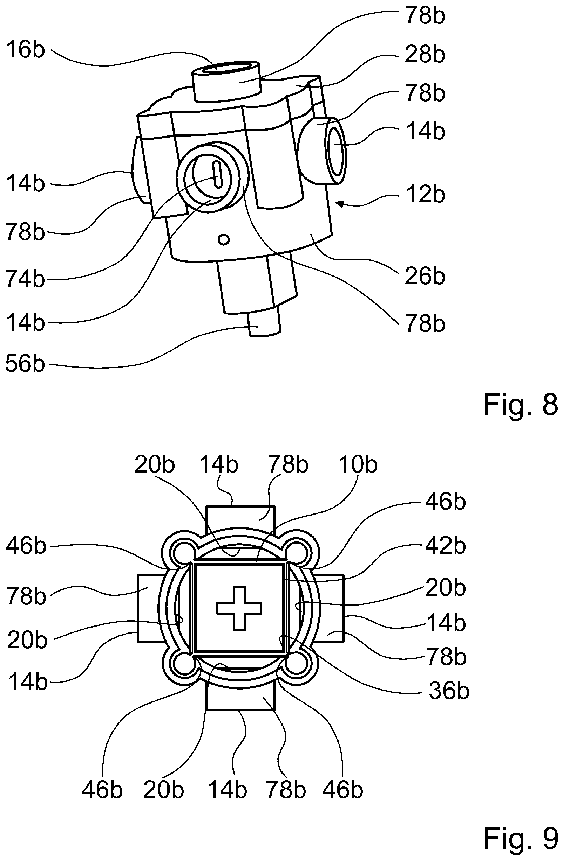

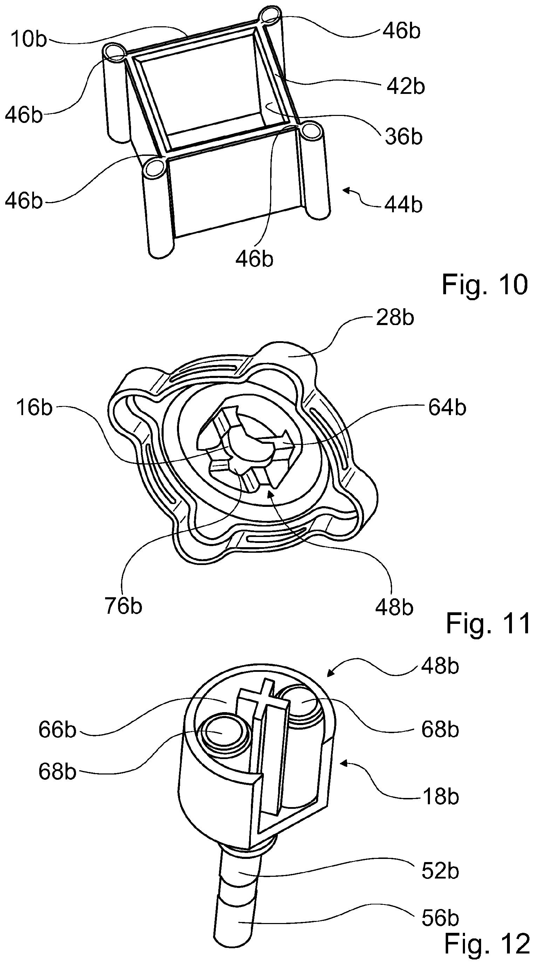

Figur 8 zeigt das Membranventil in einem weiteren Ausführungsbeispiel. Eine Membran 10b weist im nicht vorgespannten Zustand die Grundform eines Vielecks 42b auf (Figur 9, Figur 10). Im dargestellten Beispiel eines Membranventils mit vier Schaltpositionen ist die Grundform der Membran 10b ein Viereck. Ein aus einem Silikonmaterial hergestelltes Formteil 44b enthält die Membran 10b einstückig und verbindet Ecken 46b des Vielecks 42b mit einem Gehäuse 12b. Dies verhindert, dass sich die Membran 10b im Gehäuse 12b drehen kann, wenn ein Schaltelement 18b gedreht wird. Die Membran 10b wird über das Schaltelement 18b gespannt, dessen Durchmesser groß genug ist, dass die Membran 10b mit einer Vorspannung am Schaltelement 18b anliegt und sich der Umfangsform des Schaltelements 18b anpasst. Eine Innenfläche der Membran 10b dient als Gleitfläche 36b zwischen Membran 10b und Schaltelement 18b. Zusätzlich kann zwischen der Membran 10b und dem Schaltelement 18b noch ein Schmierstoff aufgetragen werden, um eine Reibung weiter zu reduzieren. Ausnehmungen 74b von Ventildurchgängen 14b sind schlitzförmig ausgebildet. Wird das Schaltelement 18b gedreht, werden durch die schlitzförmige Ausbildung der Ventildurchgänge 14b diese besonders schnell geöffnet und/oder geschlossen. Eine Rasteinrichtung 48b enthält an einem Deckelteil 28b angeordnete Rastausnehmungen 64b (Figur 11). Die Rastausnehmungen 64b dienen zugleich als Ventildurchgang 16b. Eine stirnseitige Welle 66b des Schaltelements 18b weist eine kreuzförmige Gestalt auf (Figur 12). Der Ventildurchgang 16b dient zugleich als Lagerbuchse 76b der Welle 66b. Durch die kreuzförmige Gestalt der Welle 66b verbleiben Öffnungen, durch die ein Medium strömen kann. Das Schaltelement 18b enthält stirnseitig zwei federnd gelagerte Rastkugeln 68b, die in die Rastausnehmungen 64b einrasten.

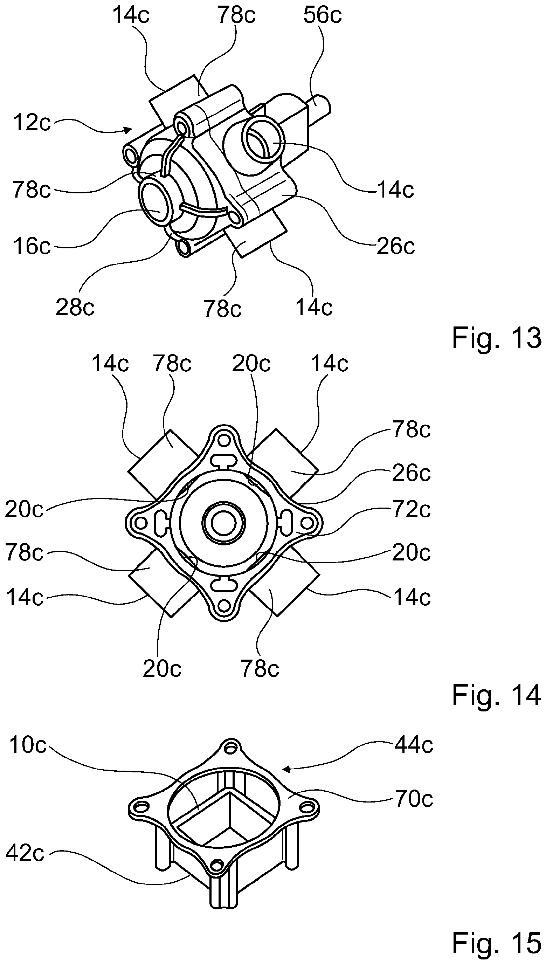

Figur 13 zeigt das Membranventil in einem weiteren Ausführungsbeispiel. Ein aus einem Silikonmaterial hergestelltes Formteil 44c enthält eine Membran 10c. Die Membran 10c hat in nicht vorgespanntem Zustand die Grundform eines Vielecks 42c. Die Membran 10c wird über das nicht dargestellte Schaltelement 18c gespannt, dessen Durchmesser groß genug ist, dass die Membran 10c mit einer Vorspannung am Schaltelement 18c anliegt und sich der Umfangsform des Schaltelements 18c anpasst. Das Formteil 44c enthält eine Dichtfläche 70c. Das Formteil 44c wird so in ein Gehäuseunterteil 26c eingesetzt, dass die Dichtfläche 70c auf einem Randbereich 72c zwischen dem Gehäuseunterteil 26c und einem Deckelteil 28c zu liegen kommt. Das Membranventil wird durch nicht näher dargestellte Schrauben verschlossen, wobei das Gehäuseunterteil 26c gegenüber dem Deckelteil 28c durch die Dichtfläche 70c des Formteils 44c abgedichtet wird.

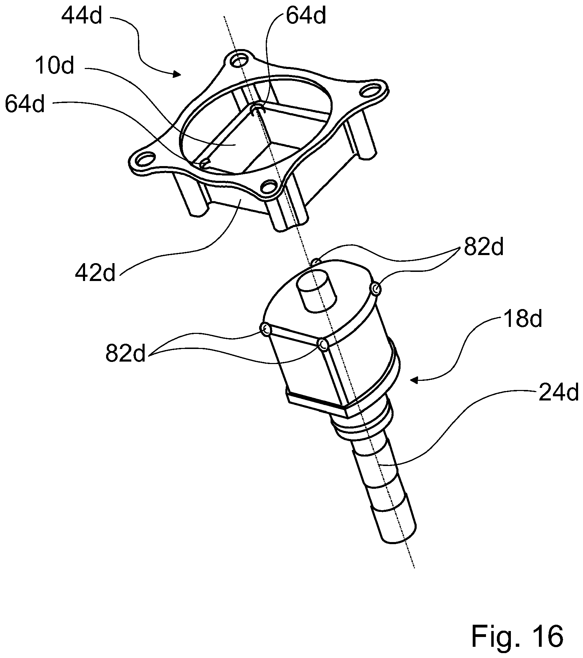

Figur 16 zeigt das Membranventil in einem weiteren Ausführungsbeispiel, welches sich in der Ausbildung der Rasteinrichtung unterscheidet. Eine Rasteinrichtung (48d) wird durch vier Rastnasen (82d) gebildet, die als Erhebungen an einem Schaltelement (18d) ausgebildet sind. Eine Membran (10d) enthält vier Rastausnehmungen (64d). Wird das Schaltelement (18d) gedreht, rasten in den vier Rastpositionen die Rastnasen (82d) in die Rastausnehmungen (64d) der Membran (10d) ein. Die Rastwirkung basiert auf der Elastizität der Membran (10d). Daher sind zur Ausbildung der Rasteinrichtung (48d) keine weiteren Federelemente erforderlich.

**Bezugszeichen**

| | | | |
|---|---|---|---|
| 10 | Membran | 48 | Rasteinrichtung |
| 12 | Gehäuse | 50 | Lagerbuchse |
| 14 | Ventildurchgang (Auslass) | 52 | Welle |
| 16 | Ventildurchgang (Einlass) | 54 | Dichtbereich |
| 18 | Schaltelement | 56 | Ende |
| 20 | Dichtfläche | 58 | Gleitelement |
| 22 | Lagervorrichtung | 60 | Rastbolzen |
| 24 | Schaltachse | 62 | Ausnehmung |
| 26 | Gehäuseunterteil | 64 | Rastausnehmung |
| 28 | Deckelteil | 66 | (stirnseitige) Welle |
| 30 | Stirnseite | 68 | Rastkugel |
| 32 | Dichtbereich | 70 | Dichtfläche |
| 34 | Durchlassbereich | 72 | Randbereich |
| 36 | Gleitfläche | 74 | Ausnehmung |
| 38 | Innenradius | 76 | (stirnseitige) Lagerbuchse |
| 40 | Vorsprung | 78 | Schnittstelle |
| 42 | Vieleck | 80 | Innenwand |
| 44 | Formteil | 82 | Rastnase |
| 46 | Ecke | | |

## Patentansprüche

1. Membranventil mit zumindest einer Membran (10a; 10b; 10c; 10d), mit einem Gehäuse (12a; 12b; 12c), welches zumindest zwei Ventildurchänge (14a, 16a; 14b, 16b; 14c, 16c) aufweist, mit einem beweglich gelagerten Schaltelement (18a; 18b; 18c; 18d), das in zumindest einer Schaltposition zumindest einen der Ventildurchgänge (14a; 14b; 14c) verschließt, indem das Schaltelement (18a; 18b; 18c; 18d) die zumindest eine Membran (10a; 10b; 10c; 10d) gegen zumindest eine Dichtfläche (20a; 20b; 20c) des zumindest einen Ventildurchgangs (14a; 14b; 14c) drückt, und mit einer Lagervorrichtung (22a; 22b; 22c), die das Schaltelement (18a; 18b; 18c; 18d) am Gehäuse (12a; 12b; 12c) um eine Schaltachse (24a; 24b; 24c) drehbar lagert, **dadurch gekennzeichnet, dass** zumindest eine Dichtflähe (20a; 20b; 20c) zumindest eines Ventildurchgangs (14a; 14b; 14c) gegenüber einem Innenradius (38a; 38b; 38c) des Gehäuses (12a; 12b; 12c) um die Schaltachse (24a; 24b; 24c; 24d) als Vorsprung (40a; 40b; 40c) in Richtung zur Schaltachse (24a; 24b; 24c; 24d) ausgebildet ist.

2. Membranventil nach Anspruch 1, **dadurch gekennzeichnet, dass** die zumindest eine Membran (10a; 10b; 10c; 10d) die Schaltachse (24a; 24b; 24c; 24d) um 360 umschließt.

3. Membranventil nach Anspruch 1 oder 2, **dadurch gekennzeichnet, dass** zumindest ein Ventildurchgang (14a; 14b; 14c) radial zur Schaltachse (24a; 24b; 24c; 24d) angeordnet ist.

4. Membranventil nach einem der vorhergehenden Ansprüche, **dadurch gekennzeichnet, dass** zumindest ein Ventildurchgang (16a; 16b; 16c) in einem Deckelteil (28a; 28b; 28c) des Gehäuses (12a; 12b; 12c) im Bereich einer Stirnseite (30a; 30b; 30c) des Schaltelements (18a; 18b; 18c; 18d) angeordnet ist.

5. Membranventil nach einem der vorhergehenden Ansprüche, **dadurch gekennzeichnet, dass** das Schaltelement (18a; 18b; 18c; 18d) in einer Umfangsrichtung um die Schaltachse (24a; 24b; 24c; 24d) zumindest einen konvex gekrümmten Dichtbereich (32a; 32b; 32c) und zumindest einen gegenüber dem Dichtbereich (32a; 32b; 32c) in Richtung zur Schaltachse (24a; 24b; 24c) zurückversetzten Durchlassbereich (34a; 34b; 34c) aufweist.

6. Membranventil nach einem der vorhergehenden Ansprüche, **dadurch gekennzeichnet, dass** das Schaltelement (18a; 18b; 18c; 18d)über eine Gleitfläche (36a; 36b; 36c; 36d) mit der zumindest einen Membran (10a; 10b; 10c; 10d) gekoppelt ist.

7. Membranventil nach einem der vorhergehenden Ansprüche, **dadurch gekennzeichnet, dass** die zumindest eine Membran (10a; 10b; 10c; 10d) im Bereich zumindest einer Dichtflähe (20a; 20b; 20c) eine Vorspannung aufweist, welche von der Dichtfläche (20a; 20b; 20c) weggerichtet ist.

8. Membranventil nach einem der vorhergehenden Ansprüche, **dadurch gekennzeichnet, dass** die zumindest eine Membran (10b; 10c; 10d) im nicht vorgespannten Zustand die Grundform eines Vielecks (42b; 42c; 42d) aufweist.

9. Membranventil zumindest nach Anspruch 7, **gekennzeichnet durch** ein Formteil (44b; 44c; 44d), das die zumindest eine Membran (10b; 10c; 10d) enthält und das Ecken (46b; 46c; 46d) des Vielecks (42b; 42c; 42d) mit dem Gehäuse (12b; 12c) verbindet.

10. Membranventil nach einem der vorhergehenden Ansprüche, **gekennzeichnet durch** ein Formteil (44c; 44d), das die zumindest eine Membran (10c, 10d) und zumindest eine als Gehäusedichtung ausgebildete Dichtflähe (70c, 70d) enthält.

11. Membranventil nach einem der vorhergehenden Ansprüche, **gekennzeichnet durch** zumindest eine Rasteinrichtung (48a; 48b; 48c; 48d), welche das Schaltelement (18a; 18b; 18c; 18d) in definierte Schaltpositionen einrasten lässt.

12. Membranventil nach Anspruch 11, **dadurch gekennzeichnet, dass** die zumindest eine eine Rastnase (82d) bildende Erhebung am Schaltelement (18d) und zumindest eine eine Rastausnehmung (64d) bildende Vertiefung an der Membran (10d) angeordnet ist.

## Claims

1. Membrane valve with at least one membrane (10a; 10b; 10c; 10d), with a housing (12a; 12b; 12c) comprising at least two valve passages (14a, 16a; 14b, 16b; 14c, 16c), with a movably supported switch element (18a; 18b; 18c; 18d) closing at least one of the valve passages (14a; 14b; 14c) in at least one switching position by way of the switch element (18a; 18b; 18c; 18d) pressing the at least one membrane (10a; 10b; 10c; 10d) against at least one sealing surface (20a; 20b; 20c) of the at least one valve passage (14a; 14b; 14c), and with a support device (22a; 22b; 22c) supporting the switch element (18a; 18b; 18c; 18d) on the housing (12a; 12b; 12c) rotatably about a switch axis (24a; 24b; 24c), **characterised in that** at least one sealing surface (20a; 20b; 20c) of at least one valve passage (14a; 14b; 14c) is implemented, with respect to an inner radius (38a; 38b; 38c) of the housing (12a; 12b; 12c) about the switch axis (24a; 24b; 24c; 24d), as a projection (40a; 40b; 40c) towards the switch axis (24a; 24b; 24c; 24d).

2. Membrane valve according to claim 1, **characterised in that** the at least one membrane (10a; 10b; 10c; 10d) encompasses the switch axis (24a; 24b; 24c; 24d) by 360 degrees.

3. Membrane valve according to claim 1 or 2, **characterised in that** at least one valve passage (14a; 14b; 14c) is arranged radially with respect to the switch axis (24a; 24b; 24c; 24d).

4. Membrane valve according to one of the preceding claims, **characterised in that** at least one valve passage (16a; 16b; 16c) is arranged in a cover part (28a; 28b; 28c) of the housing (12a; 12b; 12c) in a region of a front face (30a; 30b; 30c) of the switch element (18a; 18b; 18c; 18d).

5. Membrane valve according to one of the preceding claims, **characterised in that** the switch element (18a; 18b, 18c; 18d) comprises, in a circumferential direction about the switch axis (24a; 24b; 24c; 24d), at least one convex-curved sealing region (32a; 32b; 32c) and at least one pass-through region (34a; 34b; 34c), which is set back from the sealing region (32a; 32b; 32c) towards the switch axis (24a; 24b; 24c).

6. Membrane valve according to one of the preceding claims, **characterised in that** the switch element (18a; 18b, 18c; 18d) is coupled with the at least one membrane (10a; 10b; 10c; 10d) via a gliding surface (36a; 36b; 36c; 36d).

7. Membrane valve according to one of the preceding claims, **characterised in that** the at least one membrane (10a; 10b; 10c; 10d) comprises, in a region of at least one sealing surface (20a; 20b; 20c), a pretension directed away from the sealing surface (20a; 20b; 20c).

8. Membrane valve according to one of the preceding claims, **characterised in that** the at least one membrane (10b; 10c; 10d) comprises, in a pretension-free state, the basic shape of a polygon (42b; 42c; 42d).

9. Membrane valve at least according to claim 7, **characterised by** a moulded part (44b; 44c; 44d) containing the at least one membrane (10b; 10c; 10d) and connecting corners (46b; 46c; 46d) of the polygon (42b; 42c; 42d) to the housing (12b; 12c).

10. Membrane valve according to one of the preceding claims, **characterised by** a moulded part (44c; 44d) containing the at least one membrane (10c; 10d) as well as at least one sealing surface (70c; 70d) which is implemented as a housing seal.

11. Membrane valve according to one of the preceding claims, **characterised by** at least one latch device (48a; 48b; 48c; 48d) making the switch element (18a; 18b; 18c; 18d) latch in defined switching positions.

12. Membrane valve according to claim 11, **characterised in that** at least one elevation forming a latch tab (82d) is arranged on the switch element (18d) and at least one hollow forming a latch recess (64d) is arranged on the membrane (10d).

## Revendications

1. Soupape à diaphragme avec au moins un diaphragme (10a ; 10b ; 10c ; 10c), avec un boîtier (12a ; 12b ; 12d) comprenant au moins deux passages de soupape (14a, 16a ; 14b, 16b ; 14c, 16c), avec un élément commutateur (18a ; 18b ; 18c ; 18d), lequel ferme, en au moins une position de commutation, au moins un des passages de soupape (14a ; 14b ; 14c) par le biais de l'élément commutateur (18a ; 18b ; 18c ; 18d) appuyant l'au moins un diaphragme (10a ; 10b ; 10c ; 10d) contre au moins une superficie étanche (20a ; 20b ; 20c) de l'au moins un passage de soupape (14a ; 14b, 14c), et avec un dispositif de support soutenant l'élément commutateur (18a ; 18b ; 18c ; 18d) au boîtier (12a ; 12b, 12c) de manière rotative autour d'un axe de commutation (24a ; 24b ; 24c), **caractérisée en ce qu'au** moins une superficie étanche (20a ; 20b ; 20c) d'au moins un passage de soupape (14a ; 14b ; 14c) est implémentée, par rapport à un rayon intérieur (38a ; 38b ; 38c) du boîtier (12a ; 12b ; 12c) autour de l'axe de commutation (24a ; 24b ; 24c ; 24d) comme une saillie (40a ; 40b ; 40c) vers l'axe de commutation (24a ; 24b ; 24c ; 24d).

2. Soupape à diaphragme selon la revendication 1, **caractérisée en ce que** l'au moins un diaphragme (10a ; 10b ; 10c ; 10d) entoure l'axe de commutation (24a ; 24b ; 24c ; 24d) de 360 degrés.

3. Soupape à diaphragme selon la revendication 1 ou 2, **caractérisée en ce qu'au** moins un passage de soupape (14a ; 14b ; 14c) est disposé radialement par rapport à l'axe de commutation (24a ; 24b ; 24c ; 24d).

4. Soupape à diaphragme selon l'une quelconque des revendications précédentes, **caractérisée en ce qu'au** moins un passage de soupape (16a ; 16b ; 16c) est disposé dans un élément à couvercle (28a ; 28b ; 28c) du boîtier (12a ; 12b ; 12c) dans une région d'une face frontale (30a ; 30b ; 30c) de l'élément commutateur(18a ; 18b ; 18c ; 18d).

5. Soupape à diaphragme selon l'une quelconque des revendications précédentes, **caractérisée en ce que** l'élément commutateur (18a ; 18b ; 18c, 18d) comporte, dans une direction circonférentielle autour de l'axe de commutation (24a ; 24b ; 24c ; 24d), au moins une zone d'étanchement (32a ; 32b ; 32c) courbée de façon convexe ainsi qu'au moins une zone de passage (34a ; 34b ; 34c) décalée en arrière vers l'axe de commutation (24a ; 24b ; 24c ; 24d).

6. Soupape à diaphragme selon l'une quelconque des revendications précédentes, **caractérisée en ce que** l'élément commutateur (18a ; 18b ; 18c ; 18d) est couplé avec l'au moins un diaphragme (10a ; 10b, 10c ; 10d) via une superficie à glissage (36a ; 36b ; 36c ; 36d).

7. Soupape à diaphragme selon l'une quelconque des revendications précédentes, **caractérisée en ce que** l'au moins un diaphragme (10a ; 10b, 10c ; 10d) comporte dans une zone d'au moins une superficie d'étanchéité (20a ; 20b ; 20c) une précontrainte orientée hors de la superficie d'étanchéité (20a ; 20b ; 20c).

8. Soupape à diaphragme selon l'une quelconque des revendications précédentes, **caractérisée en ce que** l'au moins un diaphragme (10b, 10c ; 10d) a, dans l'état libre de précontrainte, la forme basique d'un polygone (42b ; 42c ; 42d).

9. Soupape à diaphragme au moins selon la revendication 7, **caractérisée par** une pièce moulée (44b ; 44c ; 44d) contenant l'au moins un diaphragme (10b, 10c ; 10d) et raccordant des coins (46b ; 46c ; 46d) du polygone (42b ; 42c ; 42d) au boîtier (12b ; 12c).

10. Soupape à diaphragme au moins selon l'une quelconque des revendications précédentes, **caractérisée par** une pièce moulée (44c ; 44d) contenant l'au moins un diaphragme (10c ; 10d) et au moins une superficie d'étanchéité (70c ; 70d) implémentée comme scellant de boîtier.

11. Soupape à diaphragme au moins selon l'une quelconque des revendications précédentes, **caractérisée par** au moins un dispositif d'encliquetage (48a ; 48b ; 48c ; 48d), laquelle fait encliqueter l'élément commutateur (18a ; 18b ; 18c ; 18d) dans des positions définies.

12. Soupape à diaphragme selon la revendication 11, **caractérisée en ce qu'**au moins une élévation formant un ergot encliquetant (82d) est disposée à l'élément commutateur (18d) et au moins une dépression formant une échancrure d'encliquetage (64d) est disposée au diaphragme (10d).
